# EUROPEAN PATENT SPECIFICATION

(11) **EP 3 509 417 B1**
(45) Date of publication and mention of the grant of the patent: **15.01.2025**
(21) Application number: 17849183.3
(22) Date of filing: 07.09.2017
(51) Int. Cl.: A01K 61/60, A01K 63/04, A01K 61/13

(54) **FLOATING INSTALLATION FOR FARMING OF MARINE ANIMALS**
SCHWIMMENDE ANORDNUNG ZUR ZÜCHTUNG VON MEERESTIEREN
INSTALLATION FLOTTANTE POUR ÉLEVAGE D'ANIMAUX MARINS

(30) Priority: 07.09.2016 NO 20161422
(43) Date of publication of application: 17.07.2019
(73) Proprietor: Searas AS, 5003 Bergen (NO)
(72) Inventor: AGA, Morten, 5003 Bergen (NO)
(74) Representative: Hindenes, Jan-Ove
(86) International application number: PCT/NO2017/050220
(87) International publication number: WO 2018/048310

(56) References cited:
- WO-A1-2011/074982
- WO-A1-2011/133045
- WO-A1-87/04320
- WO-A1-99/34668
- CA-A1- 2 075 442
- CN-A- 102 210 274
- GB-A- 1 409 926
- JP-A- 2003 138 612
- US-A- 3 635 347
- US-A- 4 798 168
- US-A- 5 010 837
- US-A1- 2008 029 041
- US-A1- 2008 142 438
- US-B1- 6 216 635

## Description

### Field of the Invention

The present invention relates to a floating installation to establish several water reservoirs including a closed farming cage, and a method for water treatment in a closed farming cage.

### BACKGROUND TO THE INVENTION

The fish farming industry in Norway is experiencing a strong demand for fish. The need for growth is urgent to meet the demands from key markets. The increased protein needs of the world must, in the future, be covered to a considerable extent by aquaculture. In recent years, it has been a challenge to increase production in line with demand.

Lice problems and access to areas have, in several instances, been cited as the main reasons why farming volumes cannot be sufficiently increased.

Development of new solutions to address these challenges will be required for an increased growth in the future. It is a prerequisite that growth shall take place within defined sustainability criteria, including economic sustainability. This means that the solutions must be cost effective.

In particular, because of the great challenges with infection of farmed fish with parasites, floating closed cage installations have lately been developed. Such installations have a watertight cage bag, i.e. it is watertight or water- impermeable in the bottom section and wall sections of the bag. It is common practice that a conventional net cage can be placed inside this watertight bag.

The various cages are large, often with sizes of 50x50 metres or round installations with a diameter of 50m, and the depth can be significant and often more than 30 metres. When such a watertight cage bag (cage with water-impermeable walls) is placed at sea or in water then large forces will act on the cage bag and one often experiences that these forces become too large in terms of the choice of material and the construction of the cage, and the cage bags rupture.

WO2011133045 describes a floating closed cage with two separate walls, where the outer wall is not water permeable, while the inner wall is water permeable, wherein the closed cage further comprises one inlet pipe for the supply of fresh water to the cage via one or more water distributors and an outlet in the bottom section of the cage for outflow of water and waste via an outflow pipe.

US4798168 describes a closed cage in which the water is pumped from a depth where there are no salmon lice.

CN204949124 describes a cage with two floating collars located outside each other such that the cage gets improved floating properties.

WO2011074982 describes a cage surrounded by a delousing tarpaulin. The amount of water inside the tarpaulin can be regulated in that the tarpaulin is raised and lowered as needed.

WO87/04320 describes in one embodiment a floating closed cage comprising an impermeable bag which can be subdivided into smaller farming modules separated from the surrounding water when lifting a ring shaped body attached to the bottom of the bag.

These solutions describe watertight cages, but the solutions do not mean that the cage can withstand greater external strains.

Thus, it is an aim of the present invention to provide a cage arrangement with watertight closed cage bags that can withstand larger external forces than the conventional solutions of today.

The forces that act on a cage bag in a cage arrangement are flow and wave forces, and also some wind forces. Furthermore, different filling degrees (amount of water in the cage) will also be able to contribute to strong forces on the cage bag.

The aim of the invention is to develop a cage arrangement that withstands more external strain than known solutions, and with this one obtains that the cages can be used in regions and areas where the weather has been considered to be too harsh.

As in other closed installations, the cages will be shielded against lice and other parasites and microorganisms that are led through the seine in installations that are not closed.

To achieve these aims, the invention provides a floating installation according to independent claim 1, wherein the installation comprises a cage bag that is held afloat with the help of floating collars. Conventional solutions have one floating collar, attached to the walls of the cage, which ensures sufficient buoyancy for the cage to be held afloat. Central to the development of the present invention is the use of multiple floating collars. These lie outside each other and a watertight wall is arranged between two such floating collars that lie side by side. Thus, a space is established between the floating collars and the wall, and this space serves as a water reservoir. Such a solution, with several floating collars and several water reservoirs, leads to a much more robust construction that can withstand larger strains.

The solution that is provided can be used for many more practical applications than for the farming of marine organisms.

Another aim of the invention is to provide a floating installation for water treatment. The installation is comprised of at least two water reservoirs and, in some embodiments, each of these water reservoirs are divided into segments.

Thus, the installation can be used for the storage of various liquids, for example, for the storage of fresh water. Furthermore, the installation can be used for various water treatments such as the treatment of water for farming marine organisms, or for the purification of water, or for the recovery of food materials or waste materials from the water.

### Summary of the Invention

Thus, the present invention is directed to a floating installation comprising the features of independent claim 1.

In one embodiment, the water-impermeable walls are of a flexible material such as a cloth or a tarpaulin.

In one embodiment, the water-impermeable walls are, in the main, of a stiff material such as fiberglass, steel, concrete.

In one embodiment, the water-impermeable walls are, in some sections, made of a stiff material, and in some sections, they are of a flexible material.

In one embodiment, at least one of said floating collars is designed with a greater buoyancy effect than the other floating collars.

In one embodiment, the floating collars are designed and have buoyancy properties sufficient that they hold the weight of the increased water volume as a result of pumping water into the bag, or by other movement of water such as by the influence of external forces such as wave or current forces.

In one embodiment, the floating collars are designed with buoyancy properties that are not greater than they will be pulled down in the water they float in with a considerable water displacement in the water reservoir (A), while the floating collar (22) is designed with sufficient buoyancy characteristics to be held afloat with the same water displacements in the water reservoir (A).

In one embodiment, the floating collars have adjustable buoyancy.

In one embodiment, between the first floating collar and the second floating collar, a net or a netting is arranged to prevent that marine organisms in the cage are transferred between the water reservoir (A) and the water reservoir (B).

In one embodiment, between the first floating collar (22) and the one or more further floating collars (20,24) spacers are arranged to hold the second floating collar at a distance from the outer first floating collar.

In one embodiment, said spacers are flexible and set up so that they can take up some movement between the floating collars when the main water reservoir (A) is subjected to external forces, or when the degree of the filling of the cage is changed.

In one embodiment, the second floating collar is designed in relation to the strengths of the cloth and reduces or eliminates the risk of overloading the capacity of the flexible fabric / net.

In one embodiment, a number of additional floating collars (20,24) are arranged inside the first floating collar (22) to establish the further water reservoirs (B, C, D).

In one embodiment, the floating collars have a circular shape.

In one embodiment, the floating collars have polygonal shape.

In one embodiment, net or netting is placed between said floating collars to prevent marine organisms being transferred between the water reservoirs and spaces are arranged to hold the floating collars a distance apart.

In one embodiment, the at least one further water reservoir (B) and optionally, additional further water reservoirs (C, D) are configured for water treatment, such as for the purification of water, oxygenation, carbon dioxide removal, etc. of water that is supplied to the main reservoir (A).

According to the invention, a number of openings (40) are arranged in a section of the first floating collar (20) so that water can flow from the at least one further water reservoir (B) to the first water reservoir (A).

In one embodiment, a number of openings are arranged in a section of the one or more additional floating collars (24) so that the water can flow from one further water reservoir (C) to another further water reservoir (B).

In one embodiment, the installation comprises more than one further water reservoirs (B, C, D) coupled together by hoses so that one can simply choose the order of the further water reservoirs (B, C, D) the water shall pass through on its way through the installation.

In one embodiment, between neighbouring floating collars and the wall that extends between two such neighbouring floating collars, partitioning walls are arranged to separate the at least one further water reservoir (B, C, D) into a number of sections (B1, B2, B3, ... C1, C2, C3 ..., D1, D2, D3 ...).

In one embodiment, some of the partitioning walls are provided with openings (34) for the transfer of liquid and any marine organisms from one segment to another. It is preferred that various water treatment methods, such as oxygenation or UV radiation can be carried out as the water flows through these openings.

In one embodiment, the installation comprises more than one further water reservoirs, wherein the further water reservoirs (B, C, D) and any sections for water treatment are configured for water treatment in a recirculation system for water.

In one embodiment, one or more first and further water reservoirs (A, B, C, D) are configured for storing liquid.

In one embodiment, said liquid that is stored in one or more of the further water reservoirs (B, C, D) is liquid that is set up for the treatment of said marine organisms.

In one embodiment, said liquid is a liquid for treatment of parasites.

In one embodiment, said liquid is fresh water, said marine organisms are fish, and said parasites are sea lice.

In one embodiment installations are arranged as platforms/walkways over the floating collars and the at least one further water reservoir (B, C, D).

In one embodiment, said marine organisms are fish.

The installation as given above is adapted for farming of marine organisms.

In one embodiment different marine organisms are farmed in the various water reservoirs (A, B, C, D) and their sections (B1, B2, B3, ... C1, C2, C3 ..., D1, D2, D3 ...).

In a further aspect and according to independent claim 10, an installation as given above is used for the treatment of liquid, preferably for water treatment such as oxygenation, removal of carbon dioxide, UV disinfection, filtration, flotation, and pH regulation, or for the removal of impurities from the liquid, or for the recovery of food materials and / or waste materials from the liquid.

In a further aspect, the present invention relates to a method for treating water supplied to a first water reservoir (A) in a farming cage in an installation according to claim 1, said method comprising the features of independent claim 11.

In one embodiment, the installation is composed of at least three floating collars such that at least two further water reservoirs (B, C) are established in addition to the main reservoir (A), and that the water treatment takes place in these at least two further water reservoirs (B, C), as the water that shall be treated is supplied to the water reservoir (C) is forced to flow in the longitudinal direction of the water reservoir (C) and via openings to the reservoir (B), and further via openings (40) of the main reservoir(A) of the cage (12).

In one embodiment, any water treatment can be carried out in the further water reservoirs (B, C, D), preferably selected from the group consisting of carbon dioxide removal, addition of oxygen, removal of impurities and skim draining.

In one embodiment, the installation is used as a recirculation system and considerable parts of the water that runs via outlet lines are treated as the water flows though the further water reservoirs (B, C, D).

### Description of Figures

Preferred embodiments of the invention shall, in the following, be described in more detail with reference to the enclosed figures, in which;
Figure 1 shows schematically a section of an embodiment of the invention with two floating collars and a further water reservoir B between these floating collars.
Figure 2 shows a section of a detail of two floating collars with spacers and net.
Figure 3 shows an embodiment where three floating collars are used.
Figure 4 shows the possible water flow in an installation with three floating collars.

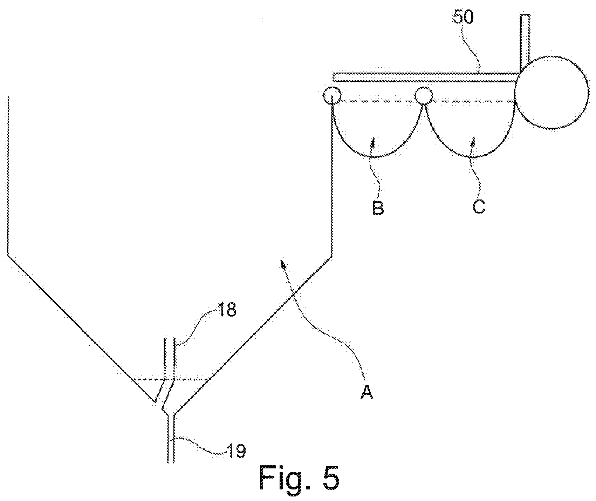

Figure 5 shows how a platform or walkway can be provided over a number of floating collars.
Figure 6A shows schematically, seen from above, an embodiment with several water reservoirs designated A, B, C and D. Each of the water reservoirs which are arranged between the floating collars can be divided into sections, for the water reservoir C given as sections C1, C2 and C3.
Figure 6B shows schematically in section an embodiment of water reservoirs A, B and C, in addition to parts of the bag which surrounds a water reservoir A.

### Description of preferred embodiments of the invention.

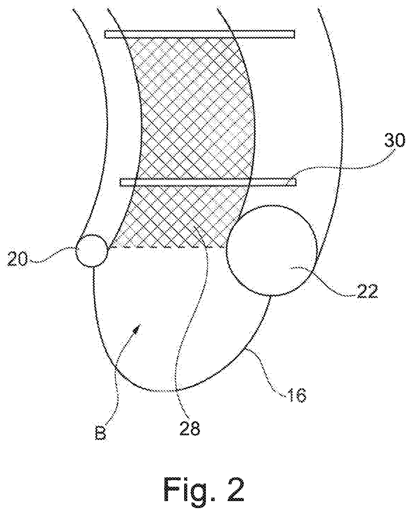

Thus, the invention relates to an installation which is arranged to float in water or in the sea. The installation is adapted for the take up of liquid (preferably water, such as sea water) in two or more reservoirs. A bag 12 with walls 14 forms a reservoir for the uptake of liquid. Liquid can be led out of and into this bag 12, and the water reservoir in the bag is designated as the water reservoir "A". A floating collar 20 with buoyancy ensures that the installation 10 floats in water or the sea. In addition, the installation 10 comprises one or more additional reservoirs, designated as B, C, D. Thus, one or more additional floating collars (22,24) are arranged inside or outside of the floating collar 20. Seen from above, when the installation is floating, these floating collars form a closed ring structure, and additional such floating collars lie outside each other, preferably with the same distance between each floating collar. Figures 2, 3 and 6B show a schematic outline of the installation and it appears that a watertight wall 16 is arranged between two floating collars which are neighbours to each other. In a section, the wall forms a U-shape and the two edge sections of the wall are, in the longitudinal direction, fastened to two neighbouring floating collars.

The installation can be used for general storage and treatment of water, Below is described an embodiment of the invention in which the installation is intended to be used for the farming of marine organisms. For example, one can farm fish in the water reservoir A, and the sections and water reservoirs B, C and D can be used to treat the water which is supplied to the water reservoir A, and also the water that is drained from A.

Thus, this embodiment of the invention describes a closed cage that can be placed at more exposed sites in respect to the existing closed systems of today.

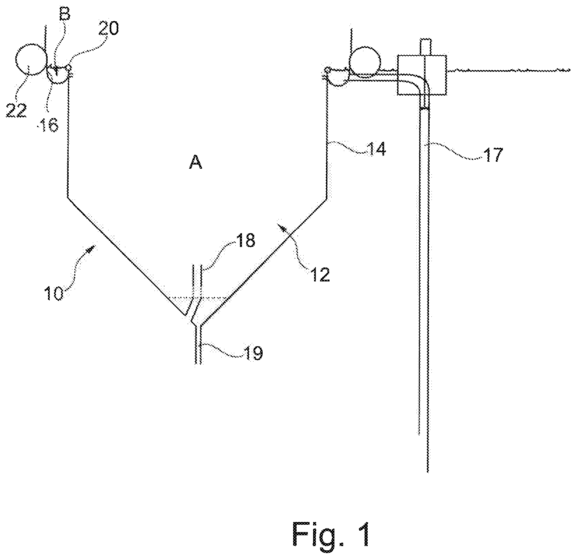

The closed cage is comprised of a flexible cloth which is impermeable to water. It is kept afloat by a primary buoyancy element which is designed according to the strength of the flexible cloth. Within this primary or first buoyancy element, a further buoyancy element is provided, and a watertight cloth is arranged between these buoyancy elements. At waves with wave periods that act on the closed cage in such a way that larger volumes of water are lifted out of the water when one fastens the cloth directly to a main floating collar, one will be able to overload the bag or floating collar. What characterises the invention is that the one buoyancy collar (for example, the floating collar 20 in Figure 1) can be pulled under water by such stress. This will ensure that the total volume, i.e. the main volume A of the cage itself and the water volume B between the two floating collars will increase when the second floating collar is lifted out of the water. This takes place in that water moves across the second floating collar and into the main volume A.

Figure 1 shows such an embodiment of a cage installation 10. The cage installation 10 comprises at least one cage 12 and establishes a water volume A within the walls 14 of the cage 12. The fish is farmed in this body of water. The cage 12 or cage installation 10 is provided with means for leading water into the cage 12, in the figure shown with a water inlet 17. Furthermore, the cage 12 is fitted with means to lead water and waste out of the cage 12, in the figure illustrated with a water outlet 18 and an outlet 19 for wastes such as sludge, faeces, uneaten feed material, etc.

Figure 1 shows schematically the core of the invention, i.e. that two or more floating collars are used. In this embodiment of the invention, a floating collar 20 is shown, and fastened to this floating collar 20 are the walls 14 of the cage 12. Meant here by the term "wall" are both the vertical walls, and any inclined and horizontal wall sections in the bottom section of the cage 12. By the terms "closed wall" and "closed cage" is meant that the large part of the cage wall sections is water impermeable, such that one thereby prevents that water with pathogenic organisms are carried over the walls 14 and into the cage 12.

For some parasites, such as, for example, salmon lice that attacks salmon, it is known that these are only found in certain layers of the water column. One avoids or reduces considerably the problem of salmon lice if the cage is watertight / water-impermeable in the upper part, for example, if such a water-impermeable section has a vertical extension down into the water column of at least 15 metres. Cages that are watertight in the sections where the parasites are can be used as the cage is arranged floating, but not according to the invention. The embodiments of the invention comprise cages 12 which are completely watertight in all wall and bottom sections. The cages 12 are normally open in the part facing upwards, and thus have the form of an open bag. This open upwardly facing section is often provided with a net to prevent escape and ingress of birds.

The aim of the invention is that the cage 12 shall withstand greater strain than conventional solutions. This is achieved by using two or more floating collars which in themselves can be flexible. The second cage collar 20 has sufficient buoyancy to keep the cage 12 afloat under normal stresses. External in relation to the second cage collar 20 is arranged a first cage collar 22. Preferably this first cage collar 22 has greater buoyancy properties than the second cage collar 20. A watertight wall 16 is arranged between the second cage collar 20 and the first cage collar 22. Between the cage collars 20,22 and the wall 16 a second water reservoir is arranged, given as B in figure 1. This serves as a compensating body and means greater flexibility and strength in the cage arrangement 10. Thus, the distance (in the horizontal position) between the floating collars 20,22 can be changed when the cage 12 is subjected to forces. The vertical position between the floating collars 20,22 can also be altered, for example, in that the second floating collar 20 is pulled down into the water as a consequence of strain on the cage walls 14. The outermost floating collar 22, shown in figure 1 as the first floating collar 22 is designed so that the cage 12 is held afloat in the water and not drawn underwater.

During the influence of waves, one will also avoid the so-called ripple effect which can be compared with what one notices when one shall carry a basin half full of water. The phenomenon is described in the SINTEF report from 2011, *Mapping of different environmental solutions to meet the environmental challenges of the aquaculture industry.* This phenomenon occurs when a wave lifts the one side of a closed cage and thus leaves the water column on one side. The water will then move toward the other side and thus we get the aforementioned ripple effect. The wall 14 may have a different flexibility, arranged for that purpose. The walls may be rigid, but they can also be very flexible, for example, constructed from a cloth or tarpaulin material. The ripple effect is greatest if the cage 12 is rigid.

As one has more than one floating collar then one also has barriers that prevent the marine organisms in the volume A of the cage 12 escaping to the outside of the installation 10 at extreme sea conditions.

In preferred embodiments of the invention, a number of spacers 30 are arranged between the floating collars 20, 22. These can be elongated, somewhat flexible elements 30 which hold two floating collars 20,22 at a given distance apart and that this distance is only changed when the cage 12 and the floating collars 20,22 are subjected to external forces. In Figure 2, they are given schematically as they extend straight across from a floating collar to another, but they may also be tilted.

In some preferred embodiments, a net 28 is arranged between floating collars 20,22 such that a fish that is in the cage 12 cannot pass into the water reservoirs B, C and D.

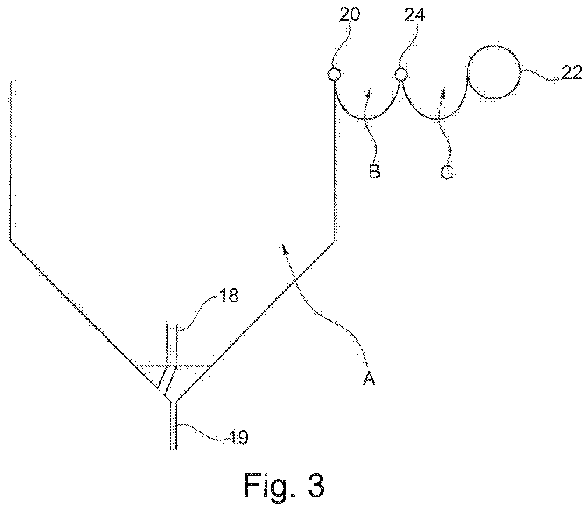

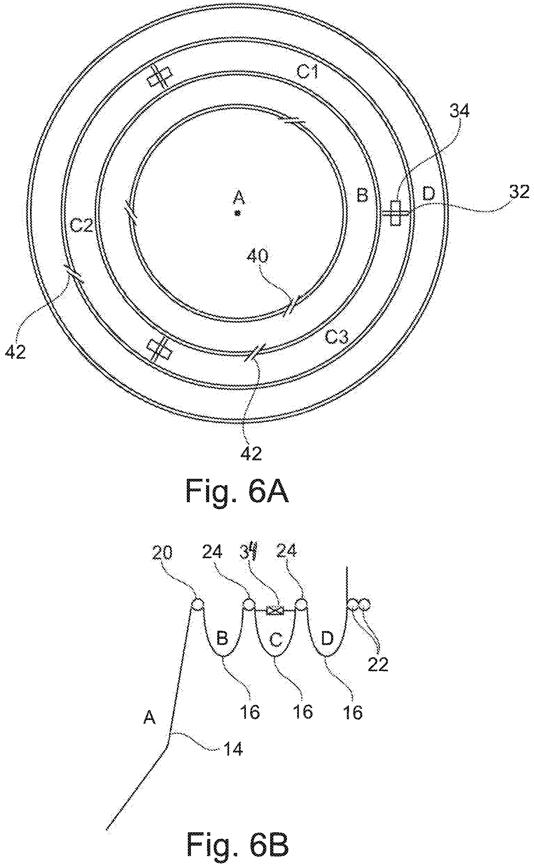

In figure 3, an embodiment of the invention is shown where a further floating collar 24 is arranged. This floating collar 24 is placed between the second floating collar 20 and the first floating collar 22. In further embodiments there can be even more floating collars 24. A bordered further water reservoir is established between each of these floating collars 20,22,24. In Figure 3, this is indicated as reservoir B between the floating collars 20 and 24, and as reservoir C between the floating collars 24 and 22, and figures 6A and 6B show, in addition, a water reservoir D.

These further water reservoirs B, C, D can be used to treat water that is supplied to or is drained from the cage 12, as explained below in more detail.

A walkway 50 can be placed over the water reservoirs B, C, D and the floating collars 20,22,24.

The present invention, with one or more water reservoirs B, C, D, established between two floating collars 20,22,24 and the associated wall sections 16, and preferably floating externally in relation to the cage 12, provides opportunities to treat the water that shall be supplied to the cage 12. This is particularly important in recycling plants for the farming of marine organisms in which all or part of the water that is discharged out of the cage 12 via the outlet 18 is led back to the cage 12 after treatment and cleaning. However, one can also carry out a water treatment if the water is fetched from a given depth.

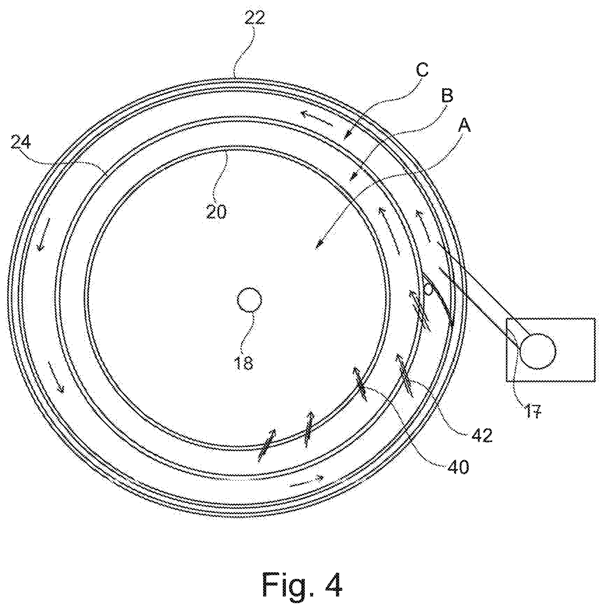

A method for such water treatment is performed in that water is added to one of the water reservoirs B, C, D that is established between the floating collars 20,22,24. In the floating collar 20, a number of openings 40 are established so that the water that flows in the water reservoir B is passed through these openings 40 and into the main water volume A of the cage 12. Shown in figure 4 is that if there are three floating collars 20,22,24 used, the water can be supplied to the outermost water reservoir C, and flow through the openings 42 in the floating collar 24, and further through openings 40 through the floating collar 20 to the cage 12. At different points or areas of the water flow path different water treatments can be carried out, such as removal of carbon dioxide, supplying of oxygen, removal of impurities, skim draining etc. As depicted in figure 6A, the water reservoirs B, C, D are divided into further sections for individual water treatment in each of the sections. Preferably, the openings 40,42 are slanted so that water is set into a rotation (flowing in only one direction) and forced into a water reservoir lying inside.

If the installation is used as a recirculation plant, removal of water from the cage 12 can be carried out via a sediment trap in the cage 12 and be transferred via a sedimentation pipe to an external collection and water treatment unit (not shown in detail), before the water, after treatment and before further treatment in the water reservoirs B, C, is circulated back to the cage 12.

In this embodiment of a cage installation 10 according to the invention where the bag 12 is a cage bag 12, and where the water reservoir A is used for farming of marine organisms, one establishes a more robust installation in that there are at least two floating collars and at least two water reservoirs. Furthermore, the water that is supplied to the installation in one of the further water reservoirs B, C or D will be able to be treated (oxygenation, removal of carbon dioxide, UV disinfection, filtration, flotation, pH control, etc.).

Preferably, the water flows from the outer water reservoir, via the water reservoirs within, until it ends up in the bag 12. However, this is not mandatory as the water can also flow in the opposite direction, or also flow from, for example, reservoir D and directly into the water reservoirs B or A. Openings in the floating collars or the wall sections, and associated pipe / pipelines can lead the water flow wherever one wishes, also within externally free-floating tanks or barges.

In some embodiments, the water from the water reservoir A is led to one of the further water reservoirs B, C or D for purification and treatment before it is returned to the water reservoir A.

As the installation comprises at least two separate water reservoirs, it can also be used for the farming of several species at the same time. For example, one can have shrimp, shellfish, algae or plankton in different chambers, and fish in a separate reservoir (preferably A). This is particularly advantageous if one species produces a waste material or biomass which can be used as a nutrient for another species. It is also appropriate to use the installation to have fish at a different stage of growth in the various water reservoirs/sections.

According to a non claimed embodiment, the installation 10 can be used for water treatment and water storage in general. For example, the water reservoir A can be used for storing fresh water (subject to watertight walls 14), and the water reservoirs B, C, D can be used for water treatment such as water purification.

In an alternative non claimed embodiment, the installation 10 is used to recover food matter or waste matter from the water, or for purification of water.

## Claims

1. Floating installation (10), wherein the installation (10) comprises;
- a bag (12) with water impermeable walls (14) for establishing a first water reservoir (A) where the walls (14) are attached to a first floating collar (20, 22),
- at least one inlet pipeline (17) for the supply of water,
- at least one outlet pipeline (18,19) for discharge of water and waste from the bag (12),
- one or more additional floating collars (22,24) arranged inside or outside the first floating collar (20, 22),
wherein an additional wall (16) is arranged between two neighboring floating collars (20-24 or 22-24) to form a U-shape when viewed in cross-section during use so that at least one further water reservoir (B, C, D) is established, wherein said additional wall (16) is water impermeable,
- wherein the bag (12) is a cage bag (12), the first water reservoir (A) is adapted for farming of marine organisms, and the at least one further water reservoir (B) and possible additional further water reservoirs (C, D) are configured for treatment of water to be supplied to the first water reservoir (A),
- wherein a number of openings (40) are arranged in a section of the first floating collar (20) so that water can flow from the at least one further water reservoir (B) to the first water reservoir (A), and preferably wherein the installation comprises more than one further water reservoirs (B C, D) coupled together with hoses so that one can easily choose the order of the further water reservoirs (B, C, D) through which the water shall flow on its way through the installation (10).

2. Installation (10) according to claim 1, wherein the water impermeable walls (14, 16) are of a flexible material such as cloth or tarpaulin, or the water impermeable walls (14) are of a substantially rigid material such as fiberglass, steel or concrete, or the water impermeable walls (14,16) are, in a few sections, of a rigid material, and are in some sections of a flexible material.

3. Installation (10) according to claim 1, wherein a number of additional floating collars (20, 24) are provided within the first floating collar (22) for establishing the further water reservoirs (B, C, D).

4. Installation (10) according to any of the claims 1-3, wherein between neighboring floating collars (20,22,24) and the additional wall (16) that extends between two such neighboring floating collars (20, 22, 24), partitioning walls (32) are arranged to divide the at least one further water reservoir (B, C, D) into a number of sections (B1, B2, B3, ... C1, C2, C3 ..., D1, D2, D3 ...).

5. Installation (10) according to claim 4, wherein some of the partitioning walls (32) are fitted with openings (34) for the transfer of liquid and marine organisms from one section to another.

6. Installation (10) according to any of the claims 1-5, wherein it comprises more than one further water reservoirs (B, C, D), wherein the further water reservoirs (B, C, D) and possible sections are configured for water treatment in a recirculation system for water.

7. Installation (10) according to any of the claims 1-6 wherein one or more of the first and further water reservoirs (A, B, C, D) are configured for storage of liquid.

8. Installation (10) according to claim 7, wherein said liquid that is stored in one or more of the further water reservoirs (B, C, D) is liquid that is set up for the treatment of marine organisms, preferably wherein said liquid is a liquid for the treatment of parasites.

9. Installation (10) according to claim 8, wherein said liquid is fresh water, said marine organisms are fish, and said parasites are sea lice.

10. Use of an installation according to claims 1-9 for the treatment of a liquid, preferably for water treatment such as oxygenation, removal of carbon dioxide, UV disinfection, filtration, flotation, and pH regulation, or for removing impurities from the liquid, or for recovery of nutrients and/or waste substances from the liquid.

11. Method for the treatment of water supplied to a first water reservoir (A) in a farming cage (12) in an installation (10) according to claim 1, wherein water that shall be supplied to the cage (12) establishing the first water reservoir (A) is supplied to the at least one further water reservoir (B, C, d), wherein the water is forced into a flow movement in the longitudinal direction of the at least one further water reservoir (B, C, d), and wherein the water as it flows around the cage (12) in the at least one further water reservoir (B, C, D) is subjected to at least one water treatment step before the water is forced to flow through the openings (40) in the first floating collar (20, 22) and into the first water reservoir (A) of the cage (12).

## Patentansprüche

1. Schwimmende Anordnung (10), wobei die Anordnung (10) Folgendes umfasst;
- einen Beutel (12) mit wasserundurchlässigen Wänden (14) zum Herstellen eines ersten Wasserbehälters (A), wobei die Wände (14) an einem ersten schwimmenden Kragen (20, 22) befestigt sind,
- mindestens eine Zulaufleitung (17) für die Wasserzufuhr,
- mindestens eine Ablaufleitung (18, 19) zum Abführen von Wasser und Abfall aus dem Beutel (12),
- einen oder mehrere zusätzliche schwimmende Kragen (22, 24), die innerhalb oder außerhalb des ersten schwimmenden Kragens (20, 22) angeordnet sind,
wobei eine zusätzliche Wand (16) zwischen zwei benachbarten schwimmenden Kragen (20-24 oder 22-24) angeordnet ist, um bei Gebrauch im Querschnitt betrachtet eine U-Form zu bilden, sodass mindestens ein weiterer Wasserbehälter (B, C, D) hergestellt wird, wobei die zusätzliche Wand (16) wasserundurchlässig ist,
- wobei der Beutel (12) ein Käfigbeutel (12) ist,
wobei der erste Wasserbehälter (A) für das Züchten von Meeresorganismen geeignet ist, und der mindestens eine weitere Wasserbehälter (B) und mögliche zusätzliche weitere Wasserbehälter (C, D) für die Behandlung von Wasser konfiguriert sind, das dem ersten Wasserbehälter (A) zuzuführen ist,
- wobei in einem Abschnitt des ersten schwimmenden Kragens (20) eine Anzahl von Öffnungen (40) angeordnet ist, sodass Wasser von dem mindestens einen weiteren Wasserbehälter (B) zu dem ersten Wasserbehälter (A) fließen kann, und wobei die Anordnung vorzugsweise mehr als einen weiteren Wasserbehälter (B, C, D) umfasst, die mit Schläuchen miteinander verbunden sind, sodass man leicht die Reihenfolge der weiteren Wasserbehälter (B, C, D) wählen kann, durch die das Wasser auf seinem Weg durch die Anordnung (10) fließen soll.

2. Anordnung (10) nach Anspruch 1, wobei die wasserundurchlässigen Wände (14, 16) aus einem flexiblen Material wie Stoff oder Plane bestehen oder die wasserundurchlässigen Wände (14) aus einem im Wesentlichen starren Material wie Fiberglas, Stahl oder Beton bestehen oder die wasserundurchlässigen Wände (14, 16) in einigen Abschnitten aus einem starren Material und in einigen Abschnitten aus einem flexiblen Material bestehen.

3. Anordnung (10) nach Anspruch 1, wobei innerhalb des ersten schwimmenden Kragens (22) eine Anzahl zusätzlicher schwimmender Kragen (20, 24) zum Herstellen der weiteren Wasserbehälter (B, C, D) bereitgestellt sind.

4. Anordnung (10) nach einem der Ansprüche 1-3, wobei zwischen benachbarten schwimmenden Kragen (20, 22, 24) und der zusätzlichen Wand (16), die sich zwischen zwei solchen benachbarten schwimmenden Kragen (20, 22, 24) erstreckt, Trennwände (32) angeordnet sind, um den mindestens einen weiteren Wasserbehälter (B, C, D) in eine Anzahl von Abschnitten (B1, B2, B3, ... C1, C2, C3 ..., D1, D2, D3 ...) zu unterteilen.

5. Anordnung (10) nach Anspruch 4, wobei einige der Trennwände (32) mit Öffnungen (34) für die Übertragung von Flüssigkeit und Meeresorganismen von einem Abschnitt in einen anderen ausgestattet sind.

6. Anordnung (10) nach einem der Ansprüche 1-5, wobei sie mehr als einen weiteren Wasserbehälter (B, C, D) umfasst, wobei die weiteren Wasserbehälter (B, C, D) und mögliche Abschnitte für die Wasserbehandlung in einem Kreislaufsystem für Wasser konfiguriert sind.

7. Anordnung (10) nach einem der Ansprüche 1-6, wobei einer oder mehrere von dem ersten und weiteren Wasserbehältern (A, B, C, D) zur Speicherung von Flüssigkeit konfiguriert sind.

8. Anordnung (10) nach Anspruch 7, wobei es sich bei der in einem oder mehreren der weiteren Wasserbehälter (B, C, D) gespeicherten Flüssigkeit um eine Flüssigkeit handelt, die zur Behandlung von Meeresorganismen vorbereitet ist, vorzugsweise wobei es sich bei der Flüssigkeit um eine Flüssigkeit zur Behandlung von Parasiten handelt.

9. Anordnung (10) nach Anspruch 8, wobei die Flüssigkeit Süßwasser ist, die Meeresorganismen Fische sind und die Parasiten Seeläuse sind.

10. Verwendung einer Anordnung nach den Ansprüchen 1-9 zur Behandlung einer Flüssigkeit, vorzugsweise zur Wasserbehandlung, wie Sauerstoffanreicherung, Kohlendioxidentfernung, UV-Desinfektion, Filtration, Flotation und pH-Regulierung, oder zum Entfernen von Verunreinigungen aus der Flüssigkeit oder zur Rückgewinnung von Nähr- und/oder Abfallstoffen aus der Flüssigkeit.

11. Verfahren zur Behandlung von Wasser, das einem ersten Wasserbehälter (A) in einem Zuchtkäfig (12) in einer Anordnung (10) nach Anspruch 1 zugeführt wird, wobei
Wasser, das dem Käfig (12) zugeführt werden soll, der den ersten Wasserbehälter (A) herstellt, dem mindestens einen weiteren Wasserbehälter (B, C, d) zugeführt wird, wobei
das Wasser zu einer Fließbewegung in der Längsrichtung des mindestens einen weiteren Wasserbehälters (B, C, d) gedrängt wird, und wobei das Wasser, während es um den Käfig (12) in dem mindestens einen weiteren Wasserbehälter (B, C, D) fließt, mindestens einem Wasserbehandlungsschritt unterzogen wird, bevor das Wasser gedrängt wird, durch die Öffnungen (40) in dem ersten schwimmende Kragen (20, 22) und in den ersten Wasserbehälter (A) des Käfigs (12) zu fließen.

## Revendications

1. Installation flottante (10), ladite installation (10) comprenant :
- un sac (12) à parois (14) imperméables à l'eau pour l'établissement d'un premier réservoir d'eau (A) où les parois (14) sont fixées à un premier collier flottant (20, 22),
- au moins une conduite d'entrée (17) pour l'approvisionnement en eau,
- au moins une conduite de sortie (18, 19) pour le rejet d'eau et de déchets du sac (12),
un ou plusieurs colliers flottants supplémentaires (22, 24) agencés à l'intérieur ou à l'extérieur du premier collier flottant (20, 22), une paroi supplémentaire (16) étant agencée entre deux colliers flottants voisins (20-24 ou 22-24) pour former une forme en U lorsqu'elle est vue en coupe transversale durant l'utilisation afin qu'au moins un réservoir d'eau supplémentaire (B, C, D) soit établi, ladite paroi supplémentaire (16) étant imperméable à l'eau,
- ledit sac (12) étant un sac de cage (12),
ledit premier réservoir d'eau (A) étant adapté à l'élevage d'organismes marins, et ledit au moins un réservoir d'eau supplémentaire (B) et d'éventuelles réservoirs d'eau supplémentaires (C, D) étant conçus pour le traitement de l'eau devant être fournie au premier réservoir d'eau (A),
- un nombre d'ouvertures (40) étant agencées dans une section du
premier collier flottant (20) afin que l'eau puisse s'écouler à partir du au moins un réservoir d'eau supplémentaire (B) jusqu'au premier réservoir d'eau (A), et de préférence ladite installation comprenant plus d'un réservoir d'eau supplémentaire (B, C, D) couplés ensemble avec des tuyaux afin de pouvoir facilement choisir l'ordre des réservoirs d'eau supplémentaires (B, C, D) à travers lesquels l'eau doit s'écouler sur son chemin à travers l'installation (10).

2. Installation (10) selon la revendication 1, lesdites parois (14, 16) imperméables à l'eau étant constituées d'un matériau souple tel qu'un tissu ou une bâche, ou lesdites parois (14) imperméables à l'eau étant constituées d'un matériau sensiblement rigide tel qu'une fibre de verre, de l'acier ou du béton, ou lesdites parois (14, 16) imperméables à l'eau étant, en quelques sections, constituées d'un matériau rigide, et étant dans certaines sections constituées d'un matériau souple.

3. Installation (10) selon la revendication 1,
un nombre de colliers flottants supplémentaires (20, 24) étant prévus dans le premier collier flottant (22) pour établir les réservoirs d'eau supplémentaires (B, C, D).

4. Installation (10) selon l'une quelconque des revendications 1-3,
entre les colliers flottants voisins (20, 22, 24) et la paroi supplémentaire (16) qui s'étend entre deux colliers flottants voisins (20, 22, 24), des parois de séparation (32) étant agencées pour diviser le au moins un réservoir d'eau supplémentaire (B, C, D) en un nombre de sections (B1, B2, B3, ... C1, C2, C3 ..., D1, D2, D3 ...).

5. Installation (10) selon la revendication 4, certaines des parois de séparation (32) étant équipées d'ouvertures (34) pour le transfert d'organismes liquides et marins d'une section à une autre.

6. Installation (10) selon l'une quelconque des revendications 1-5, comprenant plus d'un réservoir d'eau supplémentaire (B, C, D), lesdits réservoirs d'eau supplémentaires (B, C, D) et de possibles sections étant conçues pour le traitement de l'eau dans un système de recirculation de l'eau.

7. Installation (10) selon l'une quelconque des revendications 1-6,
un ou plusieurs du premier réservoir d'eau et des réservoirs d'eau supplémentaires (A, B, C, D) étant conçus pour le stockage de liquide.

8. Installation (10) selon la revendication 7,
ledit liquide qui est stocké dans un ou plusieurs des réservoirs d'eau supplémentaires (B, C, D) étant un liquide qui est mis en place pour le traitement d'organismes marins, de préférence ledit liquide étant un liquide pour le traitement de parasites.

9. Installation (10) selon la revendication 8, ledit liquide étant de l'eau douce, lesdits organismes marins étant des poissons et lesdits parasites étant des poux de mer.

10. Utilisation d'une installation selon les revendications 1-9 pour le traitement d'un liquide, de préférence pour le traitement de l'eau tel que l'oxygénation, l'élimination du dioxyde de carbone, la désinfection aux UV, la filtration, la flottation et la régulation du pH, ou pour l'élimination des impuretés du liquide, ou pour la récupération de nutriments et/ou de déchets à partir du liquide.

11. Procédé permettant le traitement de l'eau fournie à un premier réservoir d'eau (A) dans une cage d'élevage (12) dans une installation (10) selon la revendication 1,
ladite eau qui doit être fournie à la cage (12) établissant le premier réservoir d'eau (A) étant fournie à l'au moins un réservoir d'eau supplémentaire (B, C, d),
ladite eau étant forcée dans un mouvement d'écoulement dans la
direction longitudinale du au moins un réservoir d'eau supplémentaire
(B, C, d), et ladite eau, tandis qu'elle s'écoule autour de la cage (12) dans l'au moins un réservoir d'eau supplémentaire (B, C, D) étant soumise à au moins une étape de traitement de l'eau avant que l'eau ne soit forcée de s'écouler à travers les ouvertures (40) dans le premier collier flottant (20, 22) et dans le premier réservoir d'eau (A) de la cage (12).
